# EUROPEAN PATENT APPLICATION

(11) **EP 2 848 353 A1**
(43) Date of publication of application: **18.03.2015**
(21) Application number: 13184774.1
(22) Date of filing: 17.09.2013
(51) Int. Cl.: B23K 20/10, B23K 20/26

(54) **Method for ultrasonic welding with particles trapping**

(71) Applicant: ABB Technology AG, 8050 Zürich (CH)
(72) Inventor: Guillon, David, 8857 Vorderthal (CH); Trüssel, Dominik, 5620 Bremgarten (CH); Hartmann, Samuel, 5603 Staufen (CH)
(74) Representative: ABB Patent Attorneys

(57) **Abstract**

The present invention relates to a method of connecting two components by welding, in particular by ultrasonic welding, in particular for producing a power semiconductor module, said method comprising the steps of: a) aligning the components to be welded to form a welding interface (16); b) aligning a welding tool (18) to the aligned components; c) arranging a confinement housing (20) at least partly surrounding the welding interface (16); d) connecting the components by making use of the welding tool (18). The method like described above provides an easy and cost-saving measure in order to prevent particle contamination when performing a welding process such as particularly an ultrasonic welding process sue to scattered particles (20).

## Description

### Technical Field

The present invention relates to a method of connecting two components by welding, in particular by ultrasonic welding, in particular for producing a power semiconductor module. In particular, the method according to the invention provides a measure for reducing pollution due to metal particles produced at a welding step.

### Background Art

Power semiconductor modules are known in the art. Generally, power semiconductor modules comprise a baseplate, on which baseplate a substrate is arranged being provided with electrical conductors such as metallizations which serve as a location for power semiconductor devices, or chips, respectively. Said chips are connected to terminals, such as control terminals. Further, additional circuit boards may be provided which are positioned in a distance from the power semiconductor devices and arranged above said power semiconductor devices. The above defined arrangement is generally located in a housing which is filled with an insulating gel, such as silicon gel.

Ultrasonic welding (US welding) is known in the power semiconductor industry for the welding of terminals to metalized ceramic substrate. The ultrasonic welding is advantageous in terms of reliability and production throughput when compared to traditional joining techniques such as soldering.

It is, however, known for such welding processes that small sized particles are ejected out from the joining partners by mechanical forces with high temperatures and velocity such, that they get embedded in or adhered on various building blocks used for the module packaging. Further particles are also scattered when the welding tool cleans itself using ultrasonic vibration. If the particle debris is not completely removed, they may trigger poor partial discharge properties and breakdown of electrical insulation especially at high voltages. Therefore, regarding ultrasonic welding, a primary challenge is to clean the metal particles generated during the welding process.

JP2010040615 A describes a semiconductor device which includes a wiring pattern formed on an insulating substrate, a semiconductor element mounted on the wiring pattern and a lead frame mounted on the wiring pattern by ultrasonic bonding. A resin is applied around the ultrasonic bonded lead frame. According to this document, scattering of scrap metal generated in connection of the substrate wiring with the external connection lead by ultrasonic bonding should be prevented.

However, an ultrasonic welding process still has potential for improvements in particular with regard to pollution due to scattered particles.

### Disclosure of Invention

It is an object of the present invention to provide a method of connecting two components by welding, in particular by ultrasonic welding, which provides an improved reduction of contamination with regard to scattered particles.

This object is achieved by a method according to independent claim 1. Advantageous embodiments are given in the dependent claims.

The method of connecting two components by welding, in particular by ultrasonic welding, in particular for producing a semiconductor module, comprises the steps of: a) aligning the components to be welded to form a welding interface; b) aligning a welding tool to the aligned components; c) arranging a confinement housing at least partly surrounding the welding interface; and d) connecting the components by making use of the welding tool.

Such a method of connecting two components by welding provides an improved pollution behavior with regard to scattered particles and is further especially cost-saving to perform.

Like it will be apparent down below it has to be noted that the steps a) to d) like defined above and like defined in claim 1 may generally be performed not strictly in the order as chronologically mentioned, but these steps may be performed in any order which is appropriate. Advantages of respectively exemplary deviating orders are described in detail down below.

The method according to the present invention is thereby generally applicable for welding processes. However, the use of a trapping material like described above may particularly be advantageous for ultrasonic welding due to the fact that in most cases it may not be completely avoided that particles of the components to be connected, or joined, respectively, are scattered and thus spread to the vicinity of the welding region.

Further, the components to be connected by welding are generally not restricted. The welding method according to the invention may thus be applicable for connecting metallic components, non-metallic components or metallic components to non-metallic components. Non-limiting examples of non-metallic components comprise inter alia polymers such as electrically conducting polymers. As an example, a metal component may be welded to a plastic component.

Especially, the method according to the present invention may be suitable in the field of power semiconductor modules. Especially when producing power semiconductor modules, metallic components have to be connected to each other. Ultrasonic welding may thereby be used for connecting a terminal to a metallization located on a baseplate, for example. Especially when thinking about high voltages which may occur when using such power semiconductor modules, a negative influence of scattered particles may have a significant influence, like will be described in detail down below.

The method according to the invention comprises step a) according to which the components to be welded are aligned to form a welding interface. According to this step, the two components to be connected, or joined, respectively, by welding are aligned such, that they are in close vicinity to each other and preferably are touching each other at the position at which they should be welded together. The touching position thereby forms an interface at which the welding procedure should take place and thus a welding interface. With regard to the non-limiting example of performing the method within a method of producing a power semiconductor device, for example, a terminal may be transported to its position on a metallization, which position may be located on a substrate. The terminal may thus contact the metallization and may thus form a welding interface at the touching position.

The components to be welded may thereby be pressed together via an application of pressure in order to achieve a superb welded connection.

According to further step b), the method comprises the step of aligning a welding tool to the aligned components. According to this step, the tool which is used for performing the welding step is aligned such, that a welding process may start. In case an ultrasonic welding is performed, the welding tool may thus be a sonotrode which may be generally known in the art. The sonotrode may create ultrasonic vibrations and may in turn apply this vibrational energy to the components to be connected, or welded, respectively. The welding tool such as the sonotrode may thus contact one of the components to be connected and my thus apply the energy to the components and thus to the welding interface.

In order to position the components to be connected under pressure with regard to each other, the components to be connected may be aligned between an anvil and the welding tool, such as the sonotrode, for example.

According to further step c), the method comprises the step of arranging a confinement housing at least partly surrounding the welding interface.

The method is thus based on providing a particle confinement using a confinement housing around the welding zone in which all or at least a major plurality of ejected particles are trapped. The confinement housing may be arranged after the alignment of the components according to step a), for example, such as after aligning a terminal block on substrate baseplate assembly, and especially before aligning the components to be welded but it should generally be arranged before the welding process starts. Alternatively, the confinement housing may be part of any of the joined components and may thus be arranged in one step with aligning the respective components as will be described down below. The usage of a confinement housing thereby has significant advantages with regard to cleaning the vicinity of the welding interface in order to remove the scattered particles like will be described down below.

In fact, the method according to the invention is superior compared to cleaning processes such as air suction methods or blow methods and thus non-contact cleaning methods due to the fact that it is very difficult and complex to ensure that all scattered particles are removed either by pre- or post- or in-situ cleaning processes. This may be due to the fact that hot particles with high velocity may scatter in a non-defined region and embed themselves into organic materials such as polyimide. In addition, small particles adhere readily to surfaces due to strong electrostatic forces. Therefore non-contact methods such as using air suction or air blow do not completely ensure particle free modules. Further increasing the air flow can also alter the operational frequency range of the sonotrode.

The method like described above, however, may further be superior with regard to physico-chemical cleaning methods and such over contact cleaning methods. Chemical cleaning methods typically involve high costs to replenish the cleaning solvents. Additionally chemistries have to be carefully chosen to avoid no effects to a coating such as a polyimide coating. Furthermore, these cleaning methods may have a negative effect regarding the environmental point of view.

According to the above, a particle confinement strategy has many advantages over the cleaning methods known from prior art.

The confinement housing is thereby arranged such that it at least partly surrounds the welding interface. Accordingly, it may be assured that all particles may securely be trapped in the volume inside the confinement housing so that a pollution of respective surfaces outside said confinement housing with the scattered particles is not to be expected. In contrast thereto, at least partially, preferably completely, encompassing the welding interface leads to preferably no contact of the scattered particles to the respective surfaces. The confinement housing being arranged such that it at least partly surrounds the welding interface thereby shall particularly mean that the confinement housing surrounds, or incloses, respectively, the components to be welded and particularly the welding interface such, that particles which are scattered due to the welding process collide with the confinement housing and are thus kept inside the volume of said confinement housing. Therefore, the confinement housing is particularly arranged such that a distribution of scattered particles to the regions outside the confinement housing is completely avoided or at least significantly reduced.

Therefore, an optional post cleaning procedure may, if at all, focus on removing the particles being located inside the confinement housing which is much less demanding compared to post-cleaning procedure referring to removing particles sticking to surfaces of the whole generated structure. Apart from that, in dependence of the components to be welded, a removal of the scattered particles inside the confinement housing may be omitted so that a post cleaning procedure may completely be avoided.

According to further step d), the method comprises the step of connecting the components by making use of the welding tool. Like stated above, the welding tool, such as the sonotrode, may thereby guide ultrasonic vibrations into one component and thereby further to the welding interface leading to the welding interface, or the respective regions of the components to melt and thus to form a stable connection afterwards.

The frequency which is used for ultrasonic welding may thereby be chosen in dependence of the components to be welded. Generally but non-limiting, however, ultrasonic welding uses frequencies in the range of 16kHz to 1 MHz, for example.

The method like described above may provide an effective and economical particle confinement method leading to diverse advantages.

In fact, by using a method as described above an improved performance of the generated device may be achieved. When thinking about using a power semiconductor module, for example, during operation, when voltage is applied, a metal particle in an unfavorable position could lead to an electrical short or an insulation breakdown, or unsatisfactory partial discharge (PD) behavior may occur. This may be disadvantages, for example, when thinking about particle-sensitive products where a high voltage is applied under operation, such as power electronic modules such IGBT modules with a blocking voltage up to 6.5 kV.

However, next to avoiding a negative influence regarding electronic properties due to scattered particles, such as metallic particles, a mechanic influence is also avoided. In detail, if metallic or non-metallic particles are deposited on or close to mechanically moving parts or bearings, the undesired particles could influence these moving parts. This in turn could lead to damage and may further lead to an early wear-out. Therefore, the devices generated by a method according to the invention may be produced to result in a much more stable arrangement.

Apart from that, depending on the components to be connected, scattered particles obtained by ultrasonic welding may as well lead to a negative health impact to persons which are present in the circumference of a welding tool, such as operating personnel, so that by using the present invention, a health risk for operating personal, for example, may significantly be improved.

According to another aspect, it is often desired to work in a clean room environment, even in case different components are connected by ultrasonic welding. With this regard, due to the method according to the invention, scattered particles may securely be trapped in the trapping material so that a negative influence to a potentially desired clean room environment may securely be avoided.

Thus, generally by using the method according to the present invention, negative effects of scattered particles on the reliability of power electronic devices may be avoided and thus, in turn, the reliability of such devices may significantly be improved.

To summarize, the method like described above provides an easy and cost-saving measure in order to prevent particle contamination when performing a welding process such as particularly an ultrasonic welding process sue to scattered particles.

According to an embodiment, the method is part of a method for producing a power semiconductor module, wherein a terminal is welded to a metallization, wherein the confinement housing is part of a housing of the semiconductor module or the confinement housing is part of the terminal. According to this embodiment, the arrangement of the confinement housing is particularly simple due to the fact that the step of arranging the confinement housing is achieved in an automated manner by aligning the components to be welded. Further, it may be possible without any problems to leave the confinement housing in place after the welding procedure has ended so that a step of removing the confinement housing may be omitted. Further, this embodiment allows an especially easy adaption of the position as well as of the size of the confinement housing to the generated device so that an especially effective particle trapping effect may be combined with the housing not negatively influencing the working behavior of the generated device.

According to a further embodiment, the confinement housing is located at a distance from the welding interface in a range of ≥ 0,2mm to ≤ 5mm, for example at 1 mm. According to this embodiment, a confinement housing may be provided which may especially effective trap scattered particles which are ejected in substantially every angle. Thus, a pollution of surfaces outside the confinement housing due to these scattered particles may be especially securely avoided. Apart from that, the space which is required for arranging the confinement housing is especially limited so that the requirements for introducing the confinement housing are as well limited. The generated structures may in other words be formed as desired and the working behavior of the formed arrangements, such as of the formed power semiconductor device, is not negatively influenced even in case the confinement housing remains in the generated module after the welding process is finished.

According to a further embodiment, the confinement housing comprises an opening for introducing the welding tool and/or the confinement housing comprises at least a flexible region for introducing the welding tool. This embodiment allows an especially easy, comfortable and gentle welding procedure. In detail, in case the confinement housing comprises an opening for introducing the welding tool, it may be allowed in an especially easy manner that the welding process may be performed without a direct contact between the welding tool and the confinement housing. Thus, a transfer of ultrasonic energy to the confinement housing may be securely avoided. This significantly reduces the danger of devices being present in vicinity to the confinement housing being negatively influenced and further allows adjusting a welding force in an especially well defined manner. In case the confinement housing comprises at least one flexible region for introducing the welding tool, it may again be prevented that a transfer of ultrasonic energy to the confinement housing may be securely avoided. This significantly reduces the danger of devices being present in vicinity to the confinement housing being negatively influenced and further allows adjusting a welding force in an especially well defined manner. Apart from that, the region which surrounds the welding tool may completely be closed so that a passage for scattered particles to leave the confinement housing is not allowed. The flexible structure may thereby be a part of the housing and may, as an exemplary embodiment, be located in an opening like described above. The flexile structure may be generally any material which advantageously may be capable of damping ultrasonic vibrations and which may securely close the region in vicinity to the welding tool for example by surrounding the welding tool. It may thus at least partly be pushed aside so that the welding tool may slip along said material without removing the flexible material. Such a material may as an example be a sealing material, such as in a non-limiting manner ethylene propylene diene rubber (EPDM), polybutylene terephthalate (PBT), polyamide, such as PA6 or PA10, and/or the same material which is used for the module housing.

According to a further embodiment, the confinement housing comprises a damping material. Such a damping material can for example be present as a coating and may be arranged on the side facing the welding interface. According to this embodiment, the damping material may ensure that the scattered particles which come in contact with the housing, or the damping material, respectively, are not subject to a recoil and are guided to the welding tool or other components. In contrast thereto, the scattered particles are for example sticked to the preferably sticky damping material or may for example fall to the bottom of the respective structure. Such a damping material may for example be a soft material, such as a sealing material. Non-limiting examples comprise ethylene propylene diene rubber (EPDM).

According to a further embodiment, the confinement structure is connected to a component by a sealing. The confinement housing may thereby be connected to a component to be welded or to a further component. The provision of a sealing, which may in an exemplary manner be formed form a polymer component, such as ethylene propylene diene rubber (EPDM) may secure that all of the scattered particles are trapped inside the confinement housing and thereby do not contribute to a pollution outside said housing. Further, an arrangement of the confinement housing may be allowed, wherein the risk of potentially damaging the component to which the housing is connected to may be even lowered.

According to a further embodiment, the confinement structure is shaped at a connection region, in particular by a chamfer. The confinement housing may thereby be connected to a component to be welded or to a further component, such as the substrate of a power semiconductor module at which connection a connection region is formed. Thus, the confinement housing may be structured by means of a chamfer at the substrate side and may thus be connected to the substrate by or at the chamfer. According to this the distance between the confinement housing and potentially present devices being in close vicinity to the confinement housing may be enlarged. This allows an especially easy and comfortable arrangement if the confinement housing due to the chamfer may especially effectively secure that the confinement housing does not negatively influence the working behavior of the formed device. This is especially true in case the confinement housing is left in the formed device after the welding process, which in turn in possible regarding every embodiment described.

According to a further embodiment, the method is part of a method for producing a power semiconductor module, wherein the confinement housing is arranged on a metallization or in vicinity to the metallization. According to this embodiment, it may be assured in a very advantageous manner that the scattered particles are only present on the respective metallization ad that in turn no particles may reach the particularly ceramic substrate. This allows the particles to be present at the most particle-insensitive region and thus allows the particles to be hold in place after the welding step and thus to omit a cleaning procedure afterwards. Therefore, the confinement housing may be arranged directly on the metallization or it may be arranged in vicinity to the metallization and thus arranged such, that the particles are not allowed to reach the substrate but may only reach the metallization. For example, the confinement housing may touch the metallization.

### Brief Description of Drawings

These and other aspects of the invention will be apparent from and elucidated with reference to the embodiments described hereinafter.

In the drawings:

Fig. 1 shows a schematic view illustrating an embodiment of the method according to the invention;

Fig. 2 shows a schematic view illustrating a further embodiment of the method according to the invention; and

Fig. 3 shows a schematic view illustrating a further embodiment of the method according to the invention.

### Detailed Description of the Invention

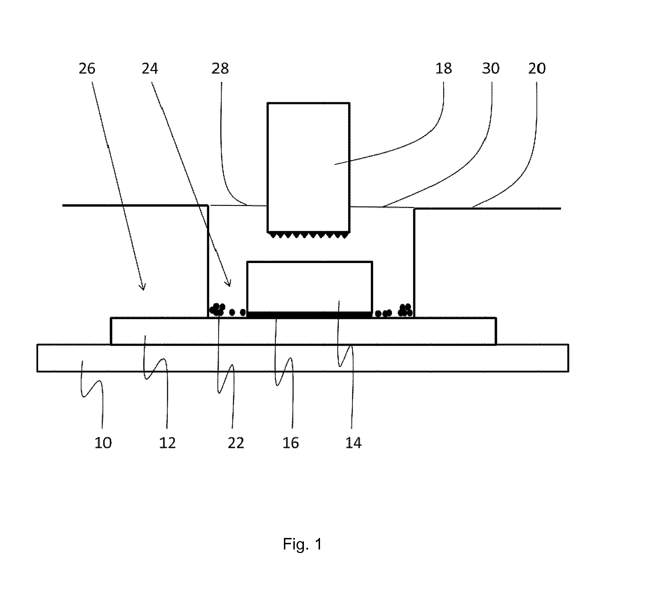

Fig. 1 shows a schematic view illustrating the method according to the invention. In detail, Fig. 1 illustrates a method of connecting two components by ultrasonic welding in the field of power semiconductor module production. In particular, a substrate 10 is shown on which substrate 10 a metallization 12 is provided. Further, a terminal 14 is shown which shall be welded to the metallization 12. The terminal 14 and the substrate 12 comprising the metallization 14 are aligned to form a welding interface 16. Further, a welding tool 18, such as a sonotrode, is aligned and may come in contact to the terminal 14. In order to perform the welding process, the sonotrode may be made use of and it may thus be activated.

In order to trap particles 22 being ejected from the connected components due to the welding force, a confinement housing 20 is provided, which is arranged such, that it at least partly encompasses the welding interface 16. The confinement housing 20 according to figure 1 is part of the housing of the generated power semiconductor module. It may be formed, for example, from metal, plastic, silicone, paper, cardboard, other organic materials. Further, it may have a rectangular, cylindrical, conical, or funnel-shaped form, wherein a rectangular form may be preferred due to space reasons. It may further have a height in the range of ≥5mm to ≤ 50mm, such as 10mm.

The confinement housing 20 may be located at a distance from the welding interface in a range of ≥ 0,2mm to ≤ 5mm. Thus, it may allow that especially the critical hot and fast particles 22 can be easily trapped by the confinement housing 20 due to their shallow ejection angle. Further, depending on the dimensioning, the particles 22 trapped in the confinement housing 20 are located only within a small distance, 1,5mm or 1 mm or less from the welding region. Therefore, they may be located at a region 24 not being sensitive to said particles 22, whereas at a particle-sensitive region 26, no particles 22 occur. The respective components can be designed in such a way that particles 22 deposited inside the confinement housing 20 do not affect the operational properties of the product. In the case of metal particles 22 affecting the insulation properties, this could e.g. be achieved by metal surfaces of the components regions being covered by the confinement housing 20.

In order to introduce the welding tool 18, further, the confinement housing 20 may comprise an opening 28 and/or may comprise at least a flexible region 30, such as brush-like or curtain-like structure, for introducing the welding tool 18.

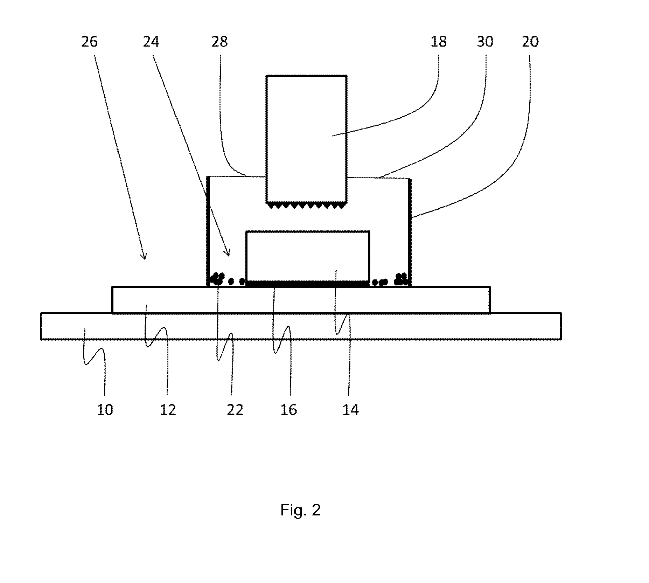

Figure 2 shows a further embodiment which essentially corresponds to the embodiment of figure 1 so that regarding a detailed description it is referred to the above description of figure 1. According to figure 2, however, the confinement housing 20 is part of the terminal 14.

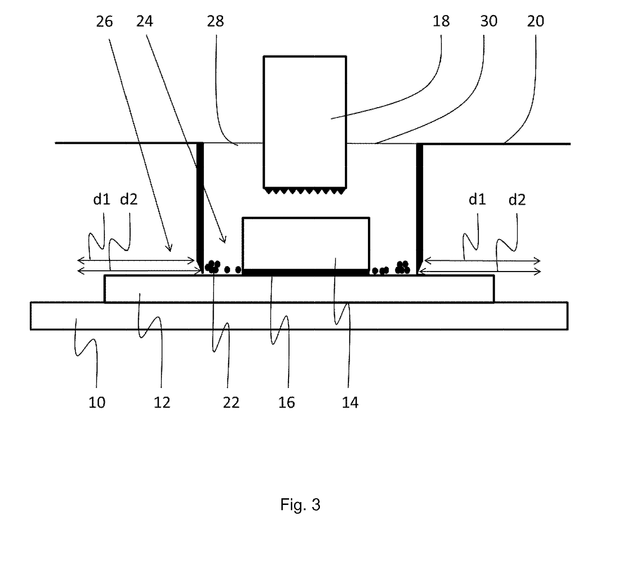

Figure 3 shows a further embodiment which essentially corresponds to the embodiment of figure 2 so that regarding a detailed description it is referred to the above description of figure 2. According to figure 3, however, the confinement housing 20 is connected to a component by a chamfer 32. In other words, the confinement housing 20 may comprise a chamfer 32 which is the contact position to a respective component. Therefore, the distance d₂ of the confinement housing 20 to a functional device may be larger compared to the distance d₁.

With respect to the method like described above, a vacuum or under-pressure may be applied to the inside of the confinement housing 20 during or after the welding process in order to remove the particles 22. It may further be provided that the confinement housing 20 stays in the product after the welding process and the particles 22 are removed by a subsequent cleaning or a vacuum process like described above. However, under circumstances the particles 22 as well as the confinement housing 20 may remain in the generate product after the welding procedure. Alternatively, the confinement housing 20 is removed after the welding process but the particles 22 which were before in the confinement housing 20 are left in the product as they are present in the particle-insensitive region 24, only.

While the invention has been illustrated and described in detail in the drawings and foregoing description, such illustration and description are to be considered illustrative or exemplary and not restrictive; the invention is not limited to the disclosed embodiments. Other variations to be disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### Reference signs list

- 10: substrate
- 12: metallization
- 14: terminal
- 16: welding interface
- 18: welding tool
- 20: confinement housing
- 22: particle
- 24: particle-insensitive region
- 26: particle-sensitive region
- 28: opening
- 30: flexible region
- 32: chamfer

## Claims

1. Method of connecting two components by welding, in particular by ultrasonic welding, in particular for producing a power semiconductor module, said method comprising the steps of:
a) Aligning the components to be welded to form a welding interface (16);
b) Aligning a welding tool (18) to the aligned components;
c) Arranging a confinement housing (20) at least partly surrounding the welding interface (16); and
d) Connecting the components by making use of the welding tool (18).

2. Method according to claim 1, wherein the method is part of a method for producing a power semiconductor module, wherein a terminal (14) is welded to a metallization (12), and wherein the confinement housing (20) is part of a housing of the power semiconductor module.

3. Method according to claim 1, wherein the method is part of a method for producing a power semiconductor module, wherein a terminal (14) is welded to a metallization (12), and wherein the confinement housing (20) is part of the terminal (14).

4. Method according to any of the preceding claims, wherein the confinement housing (20) is located at a distance from the welding interface (16) in a range of ≥ 0,2mm to ≤ 1,5mm.

5. Method according to any of the preceding claims, wherein the confinement housing (20) comprises an opening (28) for introducing the welding tool (18).

6. Method according to any of the preceding claims, wherein the confinement housing (20) comprises a flexible region (30) for introducing the welding tool (18).

7. Method according to any of the preceding claims, wherein the confinement housing (20) comprises a damping material.

8. Method according to any of the preceding claims, wherein the confinement housing (20) is connected to a component by a sealing.

9. Method according to any of the preceding claims, wherein the confinement housing (20) is shaped at a connection region, in particular by a chamfer (32).

10. Method according to any of the preceding claims, the method is part of a method for producing a power semiconductor module, wherein the confinement housing is arranged on a metallization or in vicinity to the metallization.
